**Europäisches Patentamt**

**European Patent Office**

**Office européen des brevets**

(11) Veröffentlichungsnummer: **0 249 727 B1**

## (12) EUROPÄISCHE PATENTSCHRIFT

(45) Veröffentlichungstag der Patentschrift: **04.03.92**

(21) Anmeldenummer: **87106395.4**

(22) Anmeldetag: **02.05.87**

(51) Int. Cl.⁵: **C09D 167/00**

(54) **Füllerzusammensetzung auf Wasserbasis.**

(30) Priorität: **16.05.86 AT 1305/86**

(43) Veröffentlichungstag der Anmeldung:
**23.12.87 Patentblatt 87/52**

(45) Bekanntmachung des Hinweises auf die
Patenterteilung:
**04.03.92 Patentblatt 92/10**

(84) Benannte Vertragsstaaten:
**DE ES FR GB IT SE**

(56) Entgegenhaltungen:
**EP-A- 0 032 554**
**GB-A- 2 125 421**

(73) Patentinhaber: **Vianova Kunstharz Aktiengesellschaft**

**A-8402 Werndorf(AT)**

(72) Erfinder: **Dworak, Gert**
**Dr.Robert Grafstrasse 25**
**A-8010 Graz(AT)**
Erfinder: **Staritzbichler, Werner**
**Im Hoffeld 6**
**A-8046 Graz(AT)**

## Beschreibung

Füllerzusammensetzung auf Wasserbasis

Die Erfindung betrifft eine Füllerzusammensetzung auf Wasserbasis, welche sich insbesonders durch gute Steinschlagfestigkeit auszeichnet.

Füllerzusammensetzungen werden vor allem in der Fahrzeugindustrie als Schicht zwischen Grundierung und Decklack aufgebracht und dienen einerseits zum Ausgleich von Unregelmäßigkeiten in der Grundierung, wodurch ein einwandfreies Aussehen des Decklackes gewährleistet werden soll, andererseits zur Verbesserung des Steinschlagschutzes der Gesamtlackierung. Durch ein plastisches Verhalten soll diese Schicht ein Durchschlagen der Streusplittpartikel u. ä., wie sie von fremden Fahrzeugen oder auch vom eigenen Fahrzeug gegen die Lackierung geschleudert werden, verhindern.

Es ist offensichtlich, daß diese Schicht dazu eine Reihe von Eigenschaften, wie Haftung zur Grundierung bzw. zum Decklack, weiters Flexibilität und Korrosionsfestigkeit aufweisen muß. Ebenso wichtig sind aber auch gute Verarbeitbarkeit in den automatischen Spritzanlagen der Kraftfahrzeugindustrie, sowie die für die Ausbildung einer einwandfreie Oberfläche notwendigen rheologischen Eigenschaften beim Auftrag und bei der Vernetzung. Im übrigen soll natürlich auch die Umweltfreundlichkeit der wasserverdünnbaren Bindemittelsysteme ausgenutzt werden.

Es hat nicht an Versuchen gefehlt, steinschlagfeste Füllerschichten zu entwickeln, doch konnte bisher kein System voll befriedigen. So wird in der AT-PS 367 786 vorgeschlagen, als Bindemittel für korrosionsfeste Füllermaterialien modifizierte Epoxidharze, welche sowohl in organischen Lösemitteln als auch in wäßriger Form verarbeitet werden können, einzusetzen.

Ein anderer, in der AT-PS 367 787 vorgestellter Vorschlag beschreibt die Verwendung einer zusätzlichen Zwischenschicht auf Basis von Dienpolymerisaten. Diese speziellen "Steinschlagschutzfüller" können gemeinsam mit der darauf applizierten Füllerschicht eingebrannt werden.

Mit den bisher gemachten Vorschlägen ließen sich die seitens der Verbraucher gestellten Anforderungen nicht oder nur teilweise erfüllen, sodaß der Einsatz der umweltfreundlichen Wasserfüller bisher auf Einzelfälle beschränkt geblieben ist.

Es wurde nun gefunden, daß man steinschlagfeste Füllerzusammensetzungen mit hervorragenden Eigenschaften, sowohl die Verarbeitbarkeit als auch die eingebrannten Filme betreffend, durch Kombination bestimmter wasserverdünnbarer Bindemittelsysteme und spezifischer Pigmente bzw. Füllstoffe, erhält.

Die Erfindung betrifft demgemäß wasserverdünnbare Füllerzusammensetzungen auf der Basis von Mischungen aus nach Neutralisation mit Basen wasserverdünnbaren Polyesterharzen und nach Neutralisation mit Basen wasserverdünnbaren Epoxidharz-Phosphor- und/oder -Phosphonsäureestern, sowie Aminoharzen als Vernetzungsmittel,welche dadurch gekennzeichnet sind, daß sie enthalten

(A) ein Bindemittelsystem bestehend aus

(Aa) 30 bis 87 Gew.-%, vorzugsweise 50 bis 70 Gew.-% eines wasserverdünnbaren Polyesterharzes, vorzugsweise einer Kombination bestehend aus einer durch Salzbildung mit Ammoniak und/oder Aminen wasserlöslichen Komponente und einer nichtwasserlöslichen Hydroxylkomponente und

(Ab) 5 bis 45 Gew.-%, vorzugsweise 18 bis 30 Gew.-% eines durch Salzbildung mit Ammoniak und/oder Aminen wasserlöslichen, gegebenenfalls mit Carbonsäuren modifizierten, Epoxidharz-Phosphorsäure- und/oder Epoxidharz-Phosphonsäureesters und

(Ac) 8 bis 30 Gew.-%, vorzugsweise 12 bis 22 Gew.-% eines wasserverträglichen Melaminharzes, vorzugsweise eines Produktes vom Hexamethoxymethylmelamin-Typ, sowie

(B) bezogen auf 100 Tle des Bindemittels (Festharz) einen Füllstoff- und Pigmentanteil bestehend aus

(Ba) 15 bis 60 Tlen, vorzugsweise 15 bis 40 Tlen Mikrotalkum mit einer Kornfeinheit von wenige als 10 $\mu$m, vorzugsweise einer silanbeschichteten Type und

(Bb) 0 bis 250 Tlen, vorzugsweise 40 bis 95 Tlen von anderen für Füller üblichen Pigmenten und Füllstoffen, sowie

(C) Lackhilfsmittel, Wasser und organische Hilfslösemittel.

Es wurde gefunden, daß durch die Verwendung der erfindungsgemäßen Bindemittelkombination, insbesonders durch den Einsatz des Epoxidharz-Phosphorsäureesters die Menge des Mikrotalkums wesentlich erhöht werden kann, wodurch bei der Applikation auftretende Oberflächendefekte, wie Krater oder Dellen reduziert und die Schleifbarkeit wesentlich verbessert werden.

Es ist dem Fachmann bekannt, daß Mikrotalkum für die Oberflächenausbildung und die Schleifbarkeit eines Füllers von großem Einfluß ist. Dieser Füllstoff kann in üblichen Bindemittelsystemen, gleichgültig, ob diese in Form von Lösungen in organischen Lösemitteln oder in wäßriger Form vorliegen, nur in geringen Mengen etwa bis zu 5 % eingesetzt werden. Höhere Anteile führen zu starker Mattierung und im weiteren zu einem Glanzabfall des darauf applizierten Decklacks. Auch für speziell beschichtete Mikrotalkumsorten liegt die Obergrenze bei ca. 15 % der Menge des Bindemittelfestharzes.

Durch die hohe Pigmentaufnahme des erfindungsgemäßen Bindemittelsystems ist die Möglichkeit gegeben den Anteil an Mikrotalkum, insbesonders von silanbeschichteten Typen, auf bis zu 60 %, bezogen auf die Bindemittelmenge (Festharz) zu erhöhen, ohne daß die obengenannten Nachteile auftreten.

Gleichzeitig kann bei der erfindungsgemäßen Füllerzusammensetzung eine wesentliche Verbesserung der Gebrauchseigenschaften gegenüber dem bekannten Stand der Technik beobachtet werden. Besonders auffallend ist die starke Verbesserung bei einer Belastung des Gesamtlacksystems durch Steinschlag, wie er bei Rollsplittstreuung auf den Straßen hervorgerufen wird. Aufgrund des hohen Abbaues der Stoßenergie im Füller wird die Bruchstelle an die Grenzfläche Füller-Grundierung verlegt, wodurch der durch die Grundierung gegebene Korrosionsschutz erhalten bleibt. Außerdem wird die Schadenstelle durch die gute Zwischenschichthaftung sehr klein gehalten.

Ein weiterer Vorteil der erfindungsgemäßen Füllerzusammensetzung liegt in der Tatsache, daß die genannten günstigen Eigenschaften der eingebauten Filme auch bei tiefen Temperaturen von ca. -20 ˚ C in vollem Maße erhalten bleiben.

Als Bindemittelsystem (A) enthalten die erfindungsgemäßen Füllerzusammensetzungen als Komponente (Aa) ein wasserverdünnbares Polyesterharz. Produkte dieser Art werden von zahlreichen Firmen im Handel angeboten (siehe z. B. KARSTEN, Lackrohstofftabellen, 7. Auflage, Curt R. Vincentz Verlag 1981, bzw. Produktzusammenstellungen in Fachzeitschriten, wie FARBE + LACK) und werden auch als "ölfreie" bzw. öl- bzw. fettsäuremodifizierte Alkydharze bezeichnet. Ihre Wasserverdünnbarkeit erhalten diese Harze im wesentlichen durch teilweise oder vollständige Neutralisation ihrer sauren Gruppen mit Ammoniak oder Aminen.

Eine bevorzugte Gruppe solcher als Komponente (Aa) einsetzbarer Harze ist in der AT-PS 328 587 beschrieben und besteht aus Kombinationen von durch Salzbildung wasserverdünnbaren Harzen mit einer darin dispergierten nichtwasserlöslichen Hydroxylkomponente.

Als zweite und für den Einsatzzweck wesentliche Harzkomponente (Ab) enthält das Bindemittelsystem einen durch Salzbildung mit Ammoniak und/oder Aminen wasserlöslichen, gegebenenfalls mit Carbonsäuren modifizierten Ester aus Epoxidharzen und Phosphorsäure und/ oder Phosphonsäuren. Solche,wegen ihrer Korrosionsfestigkeit als besonders vorteilhaft beschriebenen Produkte werden beispielsweise in der EP-PS 00 32 554, der DE-OS 27 57 733, der AT-PS 356 905 oder in dem Buch von Weigel, Elektrophoreselacke, Wisschaftl. Verlagsanstalt, 1967, Seite 79 beschrieben. Besonders bevorzugt werden Produkte auf der Basis von Epoxidharzen des Bisphenol-A-Typs, deren Epoxidgruppen mit 0,11 bis 1,0 Mol Phosphorsäure pro Epoxidäquivalent umgesetzt sind. Die Produkte weisen vorzugsweise eine Säurezahl von 40 bis 150 mg KOH/g auf. Durch diese Komponente erhält das Bindemittelsystem seine außerordentlich gute Pigmentbenetzung. Überdies wird durch die Phosphorsäuregruppen die Vernetzungsreaktion beim Einbrennen katalysiert.

Als Vernetzungsmittel (Komponente Ac) für das Bindemittelsystem dienen wasserverträgliche Melaminharze. Vorzugsweise werden dabei handelsübliche Melamin-Formaldehyd-Kondensate vom Typ des Hexamethoxymethylmelamins eingesetzt.

Neben dem beschriebenen Bindemittelsystem (A) stellt das als Füllstoff eingesetzte Mikrotalkum (Komponente Ba) einen wesentlichen Bestandteil der Füllerzusammensetzung dar. Dieser Füllstoff ist in der erfindungsgemäßen Füllerzusammensetzung in einer Menge von 15 bis 60 Tlen pro 100 Tlen Bindemittel-Festharz vorhanden. Zur Erzielung eines optimalen Eigenschaftsbildes soll die Füllerzusammensetzung 15 bis 40 Tle Mikrotalkum/100 Tle Bindemittel-Festharz enthalten. Grundsätzlich kann jede Mikrotalkumsorte mit einer Kornfeinheit von maximal 10 µm eingesetzt werden. Besonders vorteilhaft ist der Einsatz von 20 bis 40 Tlen pro 100 Tle Bindemittel-Festharz von silanbeschichteten Mikrotalkumtypen, wie sie von verschiedenen Herstellern angeboten werden.

Neben dem genannten Füllstoff enthalten die Füllerzusammensetzungen die üblichen Pigmente wie Titandioxid, Eisenoxidpigmente, Ruß und Antikorrosionspigmente, sowie weitere Füllstoffe, z. B. Bariumsulfat, Blancfixe, Aluminiumsilikate u. ä. Die neben dem Mikrotalkum eingesetzten Pigmente und Füllstoffe liegen in der erfindungsgemäßen Zusammensetzung in einer Menge von 0 bis 250 Tlen pro 100 Tle Bindemittel-Festharz vor. Das Pigment-Bindemittelverhältnis liegt üblicherweise zwischen 0,5 : 1 und 1,4 : 1. Vorzugsweise wird ein Pigment-Bindemittelverhältnis im Bereich von 0,8 : 1 bis 1,2 : 1 gewählt.

Neben den Pigmenten und Füllstoffen können die Lacke die üblichen Lackhilfsmittel, wie Antiabsetzmittel, Entschäumungsmittel, Verlaufmittel u. ä. enthalten. Die Auswahl und Dosierung dieser Stoffe sind dem Fachmann bekannt oder können den Verarbeitungshinweisen der Hersteller entnommen werden.

Als Lösemittel enthalten die Zusammensetzungen im wesentlichen Wasser. Die mitverwendeten organischen Hilfslösemittel, wie Glykolether, Alkohole oder Ketone sollen im Sinne der Umweltfreundlichkeit der Zusammensetzung in möglichst niedrigem Umfang eingesetzt werden.

Die Verarbeitung der Komponenten erfolgt nach den üblichen Methoden der Lackherstellung. Vorzugsweise erfolgt die Dispergierung der Pigmente in Sand- oder Perlmühlen. Der Auftrag der Füller erfolgt üblicherweise durch Spritzen nach den bekannten Druckluftverfahren bzw. luftlosen oder elektrostatischen Spritzverfahren. Die Vernetzung der aufgebrachten Füllerschichten erfolgt durch Einbrennen bei 120 bis 200˚C während 15 bis 30 Minuten.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Folgende Bindemittel werden in den Beispielen eingesetzt.

Komponente (Aa):

WL 1 : Handelsübliches, nach Neutralisation mit Aminen wasserverdünnbares ölfreies Polyesterharz mit folgenden Kenndaten:
 Lieferform : 80%ig in Glykolethern, nicht neutralisiert
Säurezahl : ca. 60 mg KOH/g
Hydroxylzahl :ca. 55 mg KOH/g
Neutralisationsmittel : Dimethylethanolamin
(Produktbezeichnung : RESYDROL®VWA 5121)

WL 2 : Handelsübliches, wasserverdünnbares mit speziellen Fettsäuren modifiziertes Polyesterharz vom Typ der in der AT-PS 328.587 beschriebenen Zusammensetzungen.
Kenndaten:
Lieferform : 40 % in Wasser und Hilfslösemittel, neutralisiert
Öllänge: 48 % (berechnet als Triglycerid)
Neutralisationsmittel : Dimethylethanolamin
(Produktbezeichnung : RESYDROL®VWA 5115)

Komponente (Ab):

PHP 1 : Handelsüblicher, wasserverdünnbarer Epoxidharzester, hergestellt gemäß AT-PS 356.905.
Lieferform: 58%ig in Lösemittelgemisch, neutralisiert
Säurezahl : (Festharz, vor Neutralisation): ca. 60 mg KOH/g
Neutralisationsmittel : Dimethylethanolamin
(Produktbezeichnung : RESYDROL®VWE 5160)

PHP 2 : Handelsüblicher, wasserverdünnbarer Epoxidharzester, hergestellt gemäß EP-PS 00 32 554.
Lieferform: 75%ig in Glykolethern, neutralisiert
 Säurezahl (Festharz, vor Neutralisation):
ca. 55 mg KOH/g
Neutralisationsmittel: Dimethylethanolamin
(Produktbezeichnung : RESYDROL®VWE 5171)

Beispiele 1 bis 8: Gemäß den in Tabelle 1 angegebenen Verhältnissen werden auf einer Perlmühle Füllerzusammensetzungen hergestellt. Die Zahlenangaben für die Harzkomponenten beziehen sich auf Festharz.

Als Mikrotalkum wurde ein nach Herstellerangabe silanbeschichtetes Talk-Chlorit-Gemisch mit folgenden Analysendaten verwendet: $SiO_2$ 47 %, MgO 30 %, $Al_2O_3$ 10,5 % $Fe_2O_3$ 1,5 %,CaO 1,0 %; Glühverlust 10 %; Siebanalyse : Anteil von max. 2 % mit einer Teilchengröße über 7 $\mu$m.

4

Tabelle 1

| Beispiel | Bindemittel | | | | (1) | Pigment + Füllstoffe | | |
| | WL 1 | WL 2 | PHP 1 | PHP 2 | MF | TiO$_2$ | BaSO$_4$ | Mikrotalkum |
|---|---|---|---|---|---|---|---|---|
| 1 (V) | 85 | – | – | – | 15 | 50 | 50 | – |
| 2 (V) | 60 | – | 25 | – | 15 | 50 | 50 | – |
| 3 (V) | 85 | – | – | – | 15 | 50 | 30 | 20 |
| 4 | 60 | – | 25 | – | 15 | 50 | 20 | 30 |
| 5 (V) | – | 85 | – | – | 15 | 50 | 50 | – |
| 6 (V) | – | 70 | – | 15 | 15 | 50 | 50 | – |
| 7 (V) | – | 85 | – | – | 15 | 50 | 10 | 40 |
| 8 | – | 70 | – | 15 | 15 | 50 | 10 | 40 |

(1) Veräthertes Melamin-Formaldehyd-Kondensat vom Hexamethoxymethylmelamin-Typ (Komponente (AC)).

(V) Vergleichsbeispiel

Die Applikation der Füllerzusammensetzungen erfolgt mittels Druckluftpistole auf ein mit einer kathodisch abgeschiedenen Elektrotauchgrundierung (ca. 20 $\mu$m) beschichtetes, zinkphosphatiertes Stahlblech.

Die Härtung des Füllers erfolgt im Umluftofen, 20 Minuten bei 160° C. In allen Fällen wird eine Trockenfilmstärke von 35 ± 2 $\mu$m erreicht.

Auf die Füllerschicht wird ein handelsüblicher Alkyd-Melamin-Automobillack aufgebracht und 30 Minuten bei 135° C gehärtet (Trockenfilm 35 ± 2 $\mu$m).

Prüfung der Lackierungen

Die Prüfergebnisse sind in Tabelle 2 zusammengefaßt. Die Beständigkeitseigenschaften der Filme (Lösungsmittel-, Wasserfestigkeit) sowie die mechanischen Werte entsprechen bei allen Beschichtungen den Praxisanforderungen.

Decklackstand: Glanz und Oberfläche des Decklackes auf den verschiedenen Füllermaterialien werden subjektiv nach einer Notenskala bewertet (1 = sehr gut, 5 = sehr schlecht).

Steinschlagfestigkeit: wird mittels Steinschlagsimulationsgerät "SPLITT" (= Single Projectile Launching Impact-Tester) geprüft. Die Methode ist in der Zeitschrift FARBE + LACK, Heft 8 / 1984, ausführlich beschrieben. Für die vorliegende Prüfung beträgt der Aufprallwinkel 5 °, der Kugeldurchmesser 3 mm bei einer Masse von 0,5 g. Die Aufprallgeschwindigkeit wurde mit 100 km/h gewählt. Die Prüflinge werden bei + 20° C und bei -20° C getestet. Angegeben wird in der Tabelle die (weitgehend kreisrunden) Schadensfläche in mm$^2$ und die an der Schadensstelle freiliegende Schicht. (Blech - B, Grundierung - G).

Tabelle 2

| Beispiel | 1 | 2 | 3 | 4 | 5 | 6 | 7 | 8 |
|---|---|---|---|---|---|---|---|---|
| Decklack-stand | 2 | 1 | 3 | 1 | 1-2 | 1 | 4 | 1 |
| SPLITT + 20°C | 6-8 B | 6-8 B | 8-10 G | 2-4 G | 7-10 B/G | 6-8 B | 10-12 G | 2-4 G |
| SPLITT - 20°C | 8-10 B | 10-12 B | 8-10 G | 2-4 G | 10-12 B | 8-10 B | 10-12 G | 2-4 G |

## Patentansprüche
**Patentansprüche für folgende Vertragsstaaten: DE, FR, GR, IT, SE**

1. Wasserverdünnbare Füllerzusammensetzungen auf der Basis von Mischungen aus nach Neutralisation mit Basen wasserverdünnbaren Polyesterharzen und nach Neutralisation mit Basen wasserverdünnbaren Epoxidharz-Phosphor- und/oder Phosphonsäureestern, sowie Aminoharzen als Vernetzungsmittel, dadurch gekennzeichnet, daß sie enthalten
   (A) ein Bindemittelsystem bestehend aus
      (Aa) 30 bis 87 Gew.-%, vorzugsweise 50 bis 70 Gew.-% eines wasserverdünnbaren Polyesterharzes, vorzugsweise einer Kombination bestehend aus einer durch Salzbildung mit Ammoniak und/oder Aminen wasserlöslichen Komponente und einer nichtwasserlöslichen Hydroxylkomponente und
      (Ab) 5 bis 45 Gew.-%` vorzugsweise 18 bis 30 Gew.-% eines durch Salzbildung mit Ammoniak und/oder Aminen wasserlöslichen, gegebenenfalls mit Carbonsäuren modifizierten, Epoxidharz-Phosphorsäure- und/oder Epoxidharz-Phosphonsäureesters und
      (Ac) 8 bis 30 Gew.-%, vorzugsweise 12 bis 22 Gew.-% eines wasserverträglichen Melaminharzes, vorzugsweise eines Produktes vom Hexamethoxymethylmelamin-Typ, sowie
   (B) bezogen auf 100 Tle des Bindemittels (Festharz) einen Füllstoff- und Pigmentanteil bestehend aus
      (Ba) 15 bis 60 Tlen, vorzugsweise 15 bis 40 Tlen Mikrotalkum mit einer Kornfeinheit von weniger als 10 $\mu$m, vorzugsweise einer silanbeschichteten Type und
      (Bb) 0 bis 250 Tlen, vorzugsweise 40 bis 95 Tlen von anderen für Füller üblichen Pigmenten und Füllstoffen, sowie
   (C) Lackhilfsmittel, Wasser und organische Hilfslösemittel.

2. Füllerzusammensetzung nach Anspruch 1, dadurch gekennzeichnet, daß die Zusammensetzung ein Pigment-Bindemittelverhältnis zwischen 0,5 : 1 und 1,4 : 1, vorzugsweise zwischen 0,8 : 1 und 1,2 : 1 aufweist.

3. Füllerzusammensetzung nach den Ansprüchen 1 und 2, dadurch gekennzeichnet, daß die Komponente (Aa) ein durch partielle Salzbildung mit Ammoniak und/oder Aminen in die wasserlösliche Form übergeführtes ölfreies Polyesterharz ist.

4. Füllerzusammensetzung nach den Ansprüchen 1 bis 3, dadurch gekennzeichnet, daß die Komponente (Ab) 0,11 bis 1,0 Mol Phosphorsäure pro Epoxidäquivalent enthält.

5. Füllerzusammensetzung nach den Ansprüchen 1 bis 4 dadurch gekennzeichnet, daß die Komponente (Ab) eine Säurezahl zwischen 40 und 150 mg KOH/g aufweist.

**Patentansprüche für folgenden Vertragsstaat: ES**

1. Verfahren zur Herstellung wasserverdünnbarer Füllerzusammensetzungen auf der Basis von Mischungen aus nach Neutralisation mit Basen wasserverdünnbaren Polyesterharzen und nach Neutralisation mit Basen wasserverdünnbaren Epoxidharz-Phosphor- und/oder Phosphonsäureestern, sowie Aminoharzen als Vernetzungsmittel <u>dadurch gekennzeichnet,</u> daß man (A) ein Bindemittelsystem bestehend aus

   (Aa) 30 bis 87 Gew.-%, vorzugsweise 50 bis 70 Gew.-% eines wasserverdünnbaren Polyesterharzes, vorzugsweise einer Kombination bestehend aus einer durch Salzbildung mit Ammoniak und/oder Aminen wasserlöslichen Komponente und einer nichtwasserlöslichen Hydroxylkomponente und

   (Ab) 5 bis 45 Gew.-%, vorzugsweise 18 bis 30 Gew.-% eines durch Salzbildung mit Ammoniak und/oder Aminen wasserlöslichen, gegebenenfalls mit Carbonsäuren modifizierten, Epoxidharz-Phosphorsäure- und/oder Epoxidharz-Phosphonsäureesters und

   (Ac) 8 bis 30 Gew.-%, vorzugsweise 12 bis 22 Gew.-% eines wasserverträglichen Melaminharzes, vorzugsweise eines Produktes vom Hexamethoxymethylmelamin-Typ, und

   (B) bezogen auf 100 Tle des Bindemittels (Festharz) einem Füllstoff- und Pigmentanteil aus

   (Ba) 15 bis 60 Tlen, vorzugsweise 15 bis 40 Tlen Mikrotalkum mit einer Kornfeinheit von weniger als 10 m, vorzugsweise einer silanbeschichteten Type und

   (Bb) 0 bis 250 Tlen, vorzugsweise 40 bis 95 Tlen von anderen für Füller üblichen Pigmenten und Füllstoffen, und

   (C) Lackhilfsmittel, Wasser und organische Hilfslösemittel mischt.

2. Verfahren nach Anspruch 1, dadurch gekennzeichnet, daß ein Pigment-Bindemittelverhältnis zwischen 0,5 : 1 und 1,4 : 1, vorzugsweise zwischen 0,8 : 1 und 1,2 : 1 verwendet wird.

3. Verfahren nach den Ansprüchen 1 und 2, dadurch gekennzeichnet, daß als Komponente (Aa) ein durch partielle Salzbildung mit Basen in die wasserlösliche Form übergeführts ölfreies Polyesterharz verwendet wird.

4. Verfahren nach den Ansprüchen 1 bis 3, dadurch gekennzeichnet, daß die Komponente (Ab) 0,11 bis 1,0 Mol Phosphorsäure pro Epoxidäquivalent enthält.

5. Verfahren nach den Ansprüchen 1 bis 4, dadurch gekennzeichnet, daß die Komponente (Ab) eine Säurezahl zwischen 40 und 150 mg KOH/g aufweist.

**Claims**
**Claims for the following Contracting States: DE, FR, GB, IT, SE**

1. Water-thinnable filler compositions based on mixtures of polyester resins, water-thinnable after neutralisation with bases, of epoxy resin-phosphoric acid esters and/or epoxy resin-phosphonic acid esters, water-thinnable after neutralisation with bases, and of amino resins as crosslinking agents, characterised in that they contain

   (A) a binder system consisting of

   (Aa) 30 to 87% by weight, preferably 50 to 70 % by weight, of a water-thinnable polyester resin, preferably a combination of a component rendered water-soluble by salt formation with ammonia and/or amines and a water-insoluble hydroxyl component, and

   (Ab) 5 to 45 % by weight, preferably 18 to 30 % by weight, of an epoxy resin-phosphoric acid ester and/or an epoxy resin-phosphonic acid ester, rendered water-soluble by salt formation with ammonia and/or amines and optionally modified with carboxylic acids, and

   (Ac) 8 to 30% by weight, preferably 12 to 22 % by weight, of a water-compatible melamine resin, preferably a product of the hexamethoxymethylmelamine type, and

   (B) based on 100 parts of the binder (resin solids), an extender and a pigment component consisting of

   (Ba) 15 to 60 parts, preferably 15 to 40 parts, of micronised talc having a particle size below 10 $\mu$m, preferably of a silane-coated type, and

   (Bb) 0 to 250 parts, preferably 40 to 95 parts, of other pigments and extenders conventional for

EP 0 249 727 B1

filler coats,
and

(C) paint additives, water and auxiliary organic solvents.

**2.** Filler composition according to Claim 1, characterised in that the composition has a pigment-binder ratio between 0.5:1 and 1.4:1, preferably between 0.8:1 and 1.2:1.

**3.** Filler composition according to Claims 1 and 2, characterised in that the component (Aa) is an oil-free polyester resin converted to the water-soluble form by partial salt formation with ammonia and/or amines.

**4.** Filler composition according to Claims 1 to 3, characterized in that the component (Ab) contains 0.11 to 1.0 mol of phosphoric acid per epoxide equivalent.

**5.** Filler composition according to Claims 1 to 4, characterized in that the component (Ab) has an acid value between 40 and 150 mg of KOH/g.

**Claims for the following Contracting State: ES**

**1.** Process for the preparation of water-thinnable filler compositions based on mixtures of polyester resins, water-thinnable after neutralization with bases, of epoxy resin-phosphoric acid esters and/or epoxy resin-phosphonic acid esters, water-thinnable after neutralisation with bases, and of amino resins as crosslinking agents, characterised in that

(A) a binder system consisting of

(Aa) 30 to 87 % by weight, preferably 50 to 70 % by weight, of a water-thinnable polyester resin, preferably a combination of a component rendered water-soluble by salt formation with ammonia and/or amines and a water-insoluble hydroxyl component, and

(Ab) 5 to 45 % by weight, preferably 18 to 30 % by weight, of an epoxy resin-phosphoric acid ester and/or an epoxy resin-phosphonic acid ester rendered water-soluble by salt formation with ammonia and/or amines and optionally modified with carboxylic acids, and

(Ac) 8 to 30 % by weight, preferably 12 to 22 % by weight, of a water-compatible melamine resin, preferably a product of the hexamethoxymethylmelamine type,

and

(B) based on 100 parts of the binder (resin solids), an extender and a pigment component consisting of

(Ba) 15 to 60 parts, preferably 15 to 40 parts, of micronised talc having a particle size below 10 $\mu$m, preferably of a silane-coated type, and

(Bb) 0 to 250 parts, preferably 40 to 95 parts, of other pigments and extenders conventional for filler coats, and

(C) paint additives, water and auxiliary organic solvents, are mixed.

**2.** Process according to Claim 1, characterised in that a pigment-binder ratio between 0.5:1 and 1.4:1, preferably between 0.8:1 and 1.2:1, is used.

**3.** Process according to Claims 1 and 2, characterised in that an oil-free polyester resin, converted to the water-soluble form by partial salt formation with bases, is used as the component (Aa).

**4.** Process according to Claims 1 to 3, characterised in that the component (Ab) contains 0.11 to 1.0 mol of phosphoric acid per epoxide equivalent.

**5.** Process according to Claims 1 to 4, characterised in that the component (Ab) has an acid value between 40 and 150 mg of KOH/g.

**Revendications**

**Revendications pour les Etats contractants suivants: DE, FR, GB, IT, SE**

**1.** Compositions d'enduit d'égalisation diluables à l'eau à base de mélanges obtenus à partir de résines de polyesters diluables à l'eau après neutralisation avec des bases et d'esters de résine époxydique-

8

acide phosphorique et/ou acide phosphonique diluables à l'eau après neutralisation avec des bases, ainsi que de résines aminées en tant que réticulant caractérisées en ce qu'elles contiennent

(A) un système de liant constitué par

(Aa) 30 à 87% en poids, de préférence 50 à 70% en poids d'une résine de polyester diluable à l'eau, de préférence d'une combinaison consistant en un composant soluble dans l'eau par salification avec de l'ammoniaque et/ou des amines et un composant hydroxylé non soluble dans l'eau,

(Ab) 5 à 45% en poids, de préférence 18 à 30% en poids d'un ester de résine époxydique-acide phosphorique et/ou de résine époxydique-acide phosphonique éventuellement modifié par des acides carboxyliques, soluble dans l'eau par salification avec de l'ammoniaque et/ou des amines et

(Ac) 8 à 30% en poids, de préférence 12 à 22% en poids d'une résine de mélamine compatible avec l'eau, de préférence d'un produit du type hexaméthoxyméthylmélamine, ainsi que,

(B) par rapport à 100 parties du liant (résine solide), une proportion de matières de charge et de pigments constituée

(Ba) de 15 à 60 parties, de préférence de 15 à 40 parties de microtalc avec une finesse de grain inférieure à 10 $\mu$m, de préférence d'un type enrobé de silane et

(Bb) de 0 à 250 parties, de préférence de 40 à 95 parties d'autres pigments et matières de charge usuels pour enduits d'égalisation, ainsi que

(C) des additifs pour peintures, de l'eau et des solvants auxiliaires organiques.

2. Composition d'enduit d'égalisation selon la revendication 1, caractérisée en ce que la composition présente un rapport pigment-liant compris entre 0,5 : 1 et 1,4 : 1, de préférence entre 0,8 : 1 et 1,2 : 1.

3. Composition d'enduit d'égalisation selon les revendications 1 et 2, caractérisée en ce que le composant (Aa) est une résine de polyester sans huile transformée en la forme hydrosoluble par salification partielle avec de l'ammoniaque et/ou des amines.

4. Composition d'enduit d'égalisation selon les revendications 1 à 3, caractérisée en ce que le composant (Ab) contient 0,11 à 1,0 mole d'acide phosphorique par équivalent époxy.

5. Composition d'enduit d'égalisation selon les revendications 1 à 4, caractérisée en ce que le composant (Ab) présente un indice d'acide compris entre 40 et 150 mg KOH/g.

**Revendications pour l'Etat contractant suivants: ES**

1. Procédé pour la préparation de compositions d'enduit d'égalisation diluables à l'eau à base de mélanges obtenus à partir de résines de polyesters diluables à l'eau après neutralisation avec des bases et d'esters de résine époxydique-acide phosphorique et/ou acide phosphonique diluables à l'eau après neutralisation avec des bases, ainsi que de résines aminées en tant que réticulant, caractérisé en ce qu'on mélange

(A) un système de liant constitué par

(Aa) 30 à 87% en poids, de préférence 50 à 70% en poids d'une résine de polyester diluable à l'eau, de préférence d'une combinaison consistant en un composant soluble dans l'eau par salification avec de l'ammoniaque et/ou des amines et un composant hydroxylé non soluble dans l'eau,

(Ab) 5 à 45% en poids, de préférence 18 à 30% en poids d'un ester de résine époxydique-acide phosphorique et/ou de résine époxydique-acide phosphonique éventuellement modifié par des acides carboxyliques, soluble dans l'eau par salification avec de l'ammoniaque et/ou des amines et

(Ac) 8 à 30% en poids, de préférence 12 à 22% en poids d'une résine de mélamine compatible avec l'eau, de préférence d'un produit du type hexaméthoxyméthylmélamine, ainsi que,

(B) par rapport à 100 parties du liant (résine solide), une proportion de matières de charge et de pigments constituée

(Ba) de 15 à 60 parties, de préférence de 15 à 40 parties de microtalc avec une finesse de grain inférieure à 10 um, de préférence d'un type enrobé de silane et

(Bb) de 0 à 250 parties, de préférence de 40 à 95 parties d'autres pigments et matières de charge usuels pour enduits d'égalisation, et

9

(C) des additifs pour peintures, de l'eau et des solvants auxiliaires organiques.

2. Procédé selon la revendication 1, caractérisé en ce qu'on utilise un rapport pigment-liant compris entre 0,5 : 1 et 1,4 : 1, de préférence entre 0,8 : 1 et 1,2 : 1.

3. Procédé selon les revendications 1 et 2, caractérisé en ce qu'on utilise en tant que composant (Aa) une résine de polyester sans huile transformée en la forme hydrosoluble par salification partielle avec des bases.

4. Procédé selon les revendications 1 à 3, caractérisé en ce que le composant (Ab) contient 0,11 à 1,0 mole d'acide phosphorique par équivalent époxy.

5. Procédé selon les revendications 1 à 4, caractérisé en ce que le composant (Ab) présente un indice d'acide compris entre 40 et 150 mg KOH/g.